# EUROPEAN PATENT SPECIFICATION

(11) **EP 1 885 191 B1**
(45) Date of publication and mention of the grant of the patent: **28.03.2012**
(21) Application number: 05797959.3
(22) Date of filing: 03.08.2005
(51) Int. Cl.: A23B 7/157, A23B 9/30, A23L 3/32, A23L 3/358

(54) **METHOD FOR TREATING AGRICULTURAL PRODUCTS OF VEGETABLE ORIGIN AND THE SIDE-PRODUCTS AND/OR DERIVATIVES OBTAINED BY TREATMENT**
VERFAHREN ZUR BEHANDLUNG VON LANDWIRTSCHAFTLICHEN PRODUKTEN PFLANZLICHEN URSPRUNGS UND DER DURCH BEHANDLUNG ERHALTENEN NEBENPRODUKTE UND DERIVATE
PROCEDE POUR LE TRAITEMENT DE PRODUITS AGRICOLES D'ORIGINE VEGETALE ET LES SOUS-PRODUITS ET/OU DERIVES OBTENUS PAR LE TRAITEMENT

(30) Priority: 25.05.2005 BE 200500256
(43) Date of publication of application: 13.02.2008
(73) Proprietor: Van Den Avenne, Xavier, B-9070 Heusden (BE)
(72) Inventor: Van Den Avenne, Xavier, B-9070 Heusden (BE)
(74) Representative: Bird, Ariane
(86) International application number: PCT/IB2005/002313
(87) International publication number: WO 2006/126039

(56) References cited:
- WO-A-00/24275
- GB-A- 172 466
- US-A- 1 842 696
- US-A1- 2003 146 108
- US-A1- 2004 105 920
- PATENT ABSTRACTS OF JAPAN vol. 1999, no. 14, 22 December 1999 (1999-12-22) -& JP 11 243934 A (MATSUSHITA ELECTRIC IND CO LTD), 14 September 1999 (1999-09-14)
- AL-HAQ M I ET AL: "Disinfection effects of electrolyzed oxidizing water on suppressing fruit rot of pear caused by Botryosphaeria berengeriana." FOOD RESEARCH INTERNATIONAL, vol. 35, no. 7, 2002, pages 657-664, XP002364790
- KOSEKI S ET AL: "Effect of acidic electrolyzed water on the microbial counts in shredded vegetables." JOURNAL OF THE JAPANESE SOCIETY FOR FOOD SCIENCE AND TECHNOLOGY (NIPPON SHOKUHIN KAGAKU KOGAKU KAISHI), vol. 47, no. 9, 2000, pages 722-726, XP008059070
- CHIN-CHENG HUANG ET AL: "Evaluation of the washing and sterilization of vegetables using electrolyzed strong acid aqueous solution." JOURNAL OF THE CHINESE AGRICULTURAL CHEMICAL SOCIETY, vol. 36, no. 5, 1998, pages 473-482, XP008059071
- PATENT ABSTRACTS OF JAPAN vol. 1998, no. 10, 31 August 1998 (1998-08-31) -& JP 10 113664 A (AIKEN KOGYO KK), 6 May 1998 (1998-05-06)
- PATENT ABSTRACTS OF JAPAN vol. 1998, no. 08, 30 June 1998 (1998-06-30) -& JP 10 056956 A (NIPPON SANSO KK), 3 March 1998 (1998-03-03)
- PATENT ABSTRACTS OF JAPAN vol. 1997, no. 11, 28 November 1997 (1997-11-28) -& JP 09 187221 A (NIPPON INTEC KK), 22 July 1997 (1997-07-22)
- PATENT ABSTRACTS OF JAPAN vol. 1995, no. 09, 31 October 1995 (1995-10-31) -& JP 07 163325 A (MIURA DENSHI KK; others: 01), 27 June 1995 (1995-06-27)
- PATENT ABSTRACTS OF JAPAN vol. 018, no. 619 (C-1278), 25 November 1994 (1994-11-25) -& JP 06 237747 A (HOSHIZAKI ELECTRIC CO LTD), 30 August 1994 (1994-08-30)

## Description

### Background of the invention

Different methods have been described to treat food with electrolysed solutions:

GB1721466 (1923) describes a method wherein moulded grain is submerged in water and subsequently treated by an electrolysed saline solution. Hereafter the treated grain is dried.

US184296 (1932)describes the disinfection of fruit with a hypochlorite solution.

JP11243934 (1999) describes the spraying of vegetables with a hypochlorite solution.

Al Haq et al. (2002) Food Res Int 35, 657-664 disclose the treatment of harvested fruit by immersion in electrolysed oxidised water containing free chlorine.

Koseki et al. (2000) J. Japan. Soc. Food Sci. Technol. 47, 722-726 and Huang et al. J. Chin. Agricult. Chem Soc. 36, 473-482 both disclose the washing and soaking of vegetables in a electrolyzed acidic solution (pH 2.7)

US2003146108 and US20040105920 describe the sterilization of food stuff and farm products with strong alkaline electrolyzed solutions.

JP10113664 (1998) described the treatment of e.g. agricultural material with an acidic (pH 2.33 to 2.88) electrolyzed solution.

WO2000/24275 discloses the disinfection of containers and animals carcasses with a fog of an electrolyzed solution. JP10056956 (1998)describes the treatment of food material such as raw lobsters or shrimps on a conveyor belt with an electrolyzed sodium chloride solution with a pH equal or below 4.

JP09187221 (1997)describes the preservation of fruit and vegetables by spraying, immersing or brushing with a acidic (pH 2 to 3) electrolyzed solution.

JP07163325 (1995) describes a method wherein a weak acidic electrolyzed saline solution is used for i.a. vegetables and fruits.

JP06237747 (1994) describes an apparatus and method to prepare electrolyzed water.

### Summary of the invention

A first aspect of the present invention relates to a method to reduce the microbiological load on agricultural raw material of vegetable origin or on side-products and/or derivatives thereof, comprising the step of spraying the agricultural raw material or side-products and/or derivatives thereof with an aqueous electrolysed saline solution, wherein the dose of the aqueous electrolysed saline solution applied is between 0.2 and 2% (v/w) of the quantity of the agricultural raw material or side-products and/or derivatives.

A second aspect of the present invention relates to the use of a sprayed aqueous electrolysed saline solution for reducing the microbiological load on agricultural raw materials of vegetable origin or on side-products and/or derivatives thereof, at a dose of the solution between 0.2 and 2% (v/w) of the raw agricultural materials or side-products and/or derivatives.

In particular embodiments of methods and uses of the present invention the dose of the solution is between 0.2 and 0.5 % (v/w) of the quantity of the agricultural raw materials or side-products and/or derivatives thereof.

In particular embodiments of methods and uses of the present invention the electrolysed saline solution has an active chlorine content between 500 and 700 mg/l.

In particular embodiments of methods and uses of the present invention the electrolysed saline solution has a pH between 7.2 and 8.5.

In particular embodiments of methods and uses of the present invention the electrolysed saline solution has a redox potential between 700 and 900 mV.

In particular embodiments of methods and uses of the present invention the electrolysed saline solution is atomized over the agricultural raw materials or side-products and/or derivatives thereof.

In particular embodiments of methods and uses of the present invention the side-products and/or derivatives of the agricultural raw materials of vegetable origin are selected from the group consisting of linseed shred, soy shred, rape seed shred, short from wheat, fodder maize and manioc pellets.

### Detailed description of the invention

The present invention relates to a method to reduce the micro-biological load on agricultural raw materials.

In this patent application, by agricultural raw materials are meant: agricultural raw materials of vegetable origin and the side-products and/or derivatives obtained by treatment.

The side-products and/or derivatives are depending on the initial raw material. Examples of such side-products and/or derivatives are linseed shred (originating from linseed), soya shred (originating from soya beans), rape seed shred (originating from rapeseed), short (originating from wheat), fodder maize (originating from maize), manioc pellets (originating from the manioc root), etc.

By nature, agricultural raw material is loaded with numerous microbic organisms. From the cultivation already, a microbiological load occurs in the form of bacteria, yeasts and fungi. Many of these organisms however, are not or less of a pathogenic nature, with respect to their ultimate destination (human food or animal fodder).

Some of these organisms are exceptions. Such as, for instance, the group of the enterobacteriaceae, to which the salmonella belongs, a potential danger to men and animals. Judging by the growing number of salmonella infections in food. Certain groups of fungi are potential sources of toxin producing organisms with very harmful consequences and toxicity with respect to human beings and animals.

The law provides for a ban on or a restriction of these organisms in order to reduce the risk whenever possible. As agricultural raw materials are constituting a possible risk of contamination in the various stages of cultivation, storing and processing, a suitable conservation and treatment impose themselves therefore.

In order to face this problem, various methods and products have already been developed in the past on the basis of thermal or chemical destruction or reduction. These known solutions however, are often laborious, too expensive and do not always result in the effect aimed at. Moreover, some of the known treatments have baleful consequences with respect to the agricultural raw material to be treated, an example being the decrease/increase of the degree of acidity with possible modification as to the processibility/digestibility as a consequence.

The purpose of the invention is to provide a method which will enable agricultural raw materials to be treated in a simple manner and at an acceptable price, without having any baleful consequences with respect to the nature of the agricultural raw materials to be treated and to the environment.

The purpose of the invention is attained by providing a method to reduce the microbiological load on agricultural raw material, the agricultural raw materials being treated by spraying an aqueous electrolysed saline solution, as claimed, by which the number of micro-organisms can be reduced. With this method it becomes possible to disinfect agricultural raw materials in a simple manner and at acceptable expenses and to preserve them without baleful consequences for the agricultural raw materials concerned. Although, up to now, agricultural raw materials were considered always to be kept dry during the various stages of their cultivation, among others when storing, in order to avoid fungoid growth and getting heated, it has quite unexpectedly appeared that by spraying the said raw materials with an aqueous electrolysed saline solution, as claimed, a distinct reduction of the micro-biological organisms present may be realized. Consequently, the risk of a further development of micro-biological organisms (among those, pathogenic germs) is strongly reduced.

An additional advantage is that the fluidity or the 'free-flowing' properties of the agricultural raw materials treated, by reducing the micro-biological load and therefore also the risk of developing mow-burn or heating up will be strongly reduced by reducing the micro-biological load and therefore also the risk of heating up or mow-burn. Indirectly, this will also have a positive influence on the possibilities for storing and transshipment of the material, more particularly, the period for its storage, for instance in a silo, may be longer, without danger for getting heated (because of increased micro-biological activities). Getting heated will cause the goods to get stuck and therefore they will become less ready for delivery and transshipment.

In a preferred method, the active chlorine content of the electrolysed saline solution is situated between 500 and 700 mg/l. Preferably, the pH-value of the electrolysed saline solution is situated between 7.2 and 8.5 and the redox potential of the electrolysed saline solution is situated between 700 and 900 mV. Furthermore, the said solution will contain about 0.2 to 0.5% salt (NaCl).

In a more preferred method according to the invention the electrolysed saline solution is atomized over the agricultural raw materials. The quantity of electrolysed saline solution applied is situated between 0.2 and 2% of the quantity of raw material to be treated by spraying, particularly between 0.2 and 1.5%, more particularly between 0.2 and 0.5%.

The quantity of electrolysed saline solution applied by spraying is particularly depending on the kind of agricultural raw material to be treated, on the humidity typical of the agricultural raw material and the subsequent treating techniques. Therefore linseed shred (having a-basic humidity of about 12%) is preferably sprayed with a quantity of electrolysed saline solution situated between 0.2 and 0.5%, in order to increase the total humidity after treatment to a maximum of 12.5%. 0.2% means an addition of 0.2% of the electrolysed saline solution, for instance: this is 2 litres for each 1000 kg (1 ton). With other applications to agricultural raw materials, having a lower humidity typical of the product, possibly larger quantities of electrolysed saline solution, in the range of between 0.2 and 2% (v/w) of the quantity of said agricultural raw material or side-products and/or derivatives, may be applied by spraying, however, depending on the final destination of the agricultural raw material (for instance, with respect to further treatment).

The methods and uses of the present invention are applied on agricultural raw products of vegetable origin or on side-products or derivatives thereof .

In this description, by means of reference numbers, there will be referred to the drawings attached in which:
- figure 1 shows a schematic representation of the installation for preparing the aqueous electrolysed saline solution.
- figure 2 shows the equilibrium of between Cl2 and HCLO and HCLO and CLO- at varying pH values.

Active chlorine kills bacteria by breaking down the chemical compounds and their molecules. Disinfectants that are used to that effect consist of chlorine components that are able to exchange atoms for other components, such as enzymes in bacteria and other cells. When enzymes will enter into contact with chlorine, one or several hydrogen atoms are replaced by chlorine. Therefore, the composition of the molecules will change and consequently the organism will decompose. When it is no longer possible for enzymes to function properly, the cell or the bacterium will finally die. An example of this process is the enzyme nitrate-reductase in the intercellular plasm of a bacterium cell.

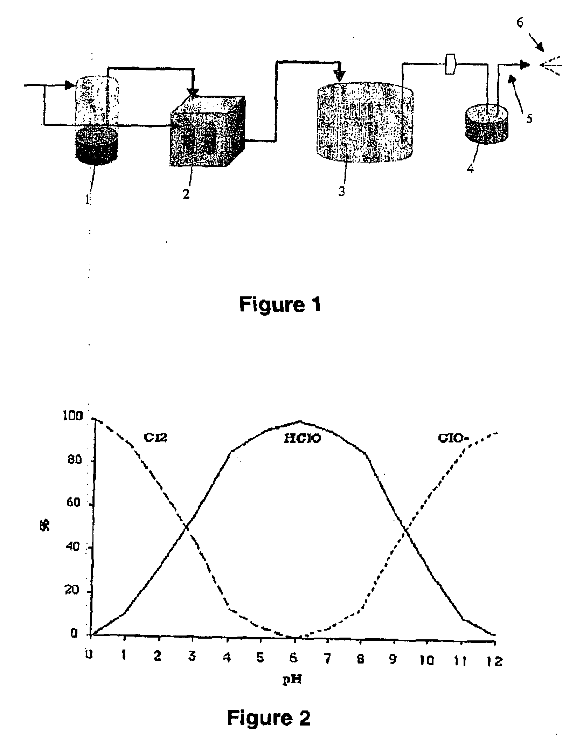

In the method disclosed herein, agricultural raw materials are sprayed by means of an aqueous electrolysed saline solution, as claimed, by which a number of micro-organisms are reduced. To prepare the said saline solution and to treat the various raw materials by spraying, an installation (see figure 1) equipped with the following parts is provided:
- a reservoir (1) for preparing a saturated saline (NaCl) solution, provided with automatic level control and water supply for dilution (for instance, tap water) ;
- two stage filter installation to supply filtered tap water having a low degree of hardness;
- a unit (2) to produce the electrolysed saline solution, this unit being equipped with a generator (50 A direct current);
- a unit with flow-through electrolytic cells;
- a diluting cell (venturi);
- a reservoir (3) to receive and store the electrolysed and diluted saline solution;
- a suction pump (4) (diaphragm type) for measuring out in doses the electrolysed and diluted saline solution (for instance, 50 bar max. output, flow rate 0 - 10 litre/minute);
- a connecting hose(5)to distribute the electrolysed and diluted saline solution between the suction pump (4) and the spray/atomization/dosage device (6).

The electrolysed solution is materialized by applying electrolysis to a saline solution (NaCl, technical degree of purity 99.7%. By submitting this saline solution to a process of electrolysis, a solution is produced having the following characteristics:
- a content of active chlorine, situated between 500 and 700 mg/l;
- a pH situated between 7.2 and 8.5;
- a redux potential situated between 700 and 900 mV.

Depending on the acidity of the electrolysed solution a chemical balance is constituted. As represented in figure 2, hypochlorous acid of about 90% is formed within the reach of the pH-value obtained.

Because, by nature, the cell wall of micro-organisms or bacteria has a negative electric charge, this cell wall can be penetrated by the neutral hypochlorous acid with the consequence that the cell functions as well as the cell division are disturbed.

Depending on the pH-value, hypochlorous acid (HOCl) will split up in hypochlorite ions :

HOCL + H₂O -> H₃O⁺ + Ocl⁼

This will finally disintegrate into chlorine and oxygen atoms :

Ocl⁼ -> Cl⁻ + 0

Therefore, hypochlorous acid (HOCl when electrically neutral and hypochlorite ions (Ocl⁻, electrically negative) will form free chlorine, when they are put together. The result is a disinfecting action. The disinfecting properties of this solution consist of the disinfecting action of chlorine combined with the oxidizing properties of the free oxygen atoms.

The electrolysed saline solution obtained is applied to the agricultural materials through spraying by providing 0.2 - 2%, preferably 0.2 - 0.5% of this solution, depending on the application. The maximum quantity possible to be applied is determined by the final humidity of the agricultural material concerned.

After the electrolysed saline solution has been applied by spraying ,as claimed, the agricultural materials treated will be removed for further processing or to be temporary stored, awaiting further treatment/handling.

The effectiveness of the method according to the invention is clearly shown in the following example. In this example the option was to apply the electrolysed saline solution by spraying, to a side-product of rape seed rich in proteins.

On the basis of a series (n=10) of micro-biological analyses that were carried out, an average bacteriological profile of this raw material was made.

| | |
|---|---|
| total bacterial count: | 200.000 gfu/g |
| total of conforms: | 10.000 gfu/g |
| enterobacteriaciae: | 6.000 gfu/g |
| fungi and yeasts: | 5.000 gfu/u |
| gfu/g: germ forming unit per gram) | |

Applying the saline solution was done by means of spraying when unloading the goods from a ship and stored in a silo at the rate of 3 litre/min at a loading rate of about 100 tons/hour, -> average dose 0.3% on the basis of the product.

After treatment, each lot (n-10) was again subjected to a micro-biological analysis by means of a representative sampling. The following results were obtained:

| | |
|---|---|
| total bacterial count: | 4.000 gfu/g |
| total of coliforms: | 100 gfu/g |
| enterobacteriaciae : | < 10 gfu/g |
| fungi and yeasts: | 500 gfu/u |

Organoleptically, no deviations were found in the lots treated with respect to the lot not treated.

As appears from the example mentioned above, from the results obtained may be deducted that applying an electrolysed saline solution by spraying as claimed to agricultural raw materials will perform a clear reduction of the bacteria present, because of which the risk that pathogenic germs will occur will be significantly reduced.

## Claims

1. A method to reduce the microbiological load on agricultural raw material of vegetable origin or on side-products and/or derivatives thereof, comprising the step of spraying said agricultural raw material or side-products and/or derivatives thereof with an aqueous electrolysed saline solution, wherein the dose of the aqueous electrolysed saline solution applied is between 0.2 and 2% (v/w) of the quantity of said agricultural raw material or side-products and/or derivatives.

2. The method according to claim 1, wherein the dose of said solution is between 0.2 and 0.5 % (v/w) of the quantity of said agricultural raw materials or side-products and/or derivatives thereof.

3. The method according to claim 1 or 2, wherein the electrolysed saline solution has an active chlorine content between 500 and 700 mg/l.

4. The method according to any one of claims 1 to 3, wherein the electrolysed saline solution has a pH between 7.2 and 8.5.

5. The method according to any one of claims 1 to 4, wherein the electrolysed saline solution has a redox potential between 700 and 900 mV.

6. The method according to any one of claims 1 to 5, **characterized in that** said electrolysed saline solution is atomized over said agricultural raw materials or side-products and/or derivatives thereof.

7. The method according to any one of claims 1 to 6, wherein the side-products and/or derivatives of said agricultural raw materials of vegetable origin are selected from the group consisting of linseed shred, soy shred, rape seed shred, short from wheat, fodder maize and manioc pellets.

8. Use of a sprayed aqueous electrolysed saline solution for reducing the microbiological load on agricultural raw materials of vegetable origin or on side-products and/or derivatives thereof, at a dose of said solution between 0.2 and 2% (v/w) of said raw agricultural materials or side-products and/or derivatives.

9. The use according to claim 8, wherein the dose of said electrolysed saline solution is between 0.2 and 0.5 % (v/w) of said agricultural raw materials or side-products and/or derivatives thereof.

10. The use according to claim 8 or 9, wherein the electrolysed saline solution has an active chlorine content between 500 and 700 mg/l.

11. The use according to any of claims 8 to 10, wherein the electrolysed saline solution has a pH between 7.2 and 8.5.

12. The use according to any of claims 8 to 11, wherein the electrolysed saline solution has a redox potential between 700 and 900 mV.

13. The use according to any of claims 8 to 12, wherein the electrolysed saline solution is atomized.

14. The use according to any of claims 8 to 13, wherein the side-products and/or derivatives of said agricultural raw materials of vegetable origin are selected from the group consisting of linseed shred, soy shred, rape seed shred, short from wheat, fodder maize and manioc pellets.

## Patentansprüche

1. Verfahren zur Verringerung der mikrobiologischen Belastung bei landwirtschaftlichem Rohmaterial pflanzlichen Ursprungs oder bei Nebenprodukten und/oder Derivaten hiervon, umfassend den Schritt des Besprühens des landwirtschaftlichen Rohmaterials oder der Nebenprodukte und/oder Derivate hiervon mit einer wässrigen, einer Elektrolyse ausgesetzten Salinelösung, wobei die eingesetzte Dosis der wässrigen, einer Elektrolyse ausgesetzten Salinelösung 0,2 bis 2% (v/w) der Menge des landwirtschaftlichen Rohmaterials oder der Nebenprodukte und/oder Derivate beträgt.

2. Verfahren nach Anspruch 1, wobei die Dosis der Lösung 0,2 bis 0,5% (v/w) der Menge der landwirtschaftlichen Rohmaterialien oder Nebenprodukte und/oder Derivate hiervon beträgt.

3. Verfahren nach Anspruch 1 oder 2, wobei die einer Elektrolyse ausgesetzte Salinelösung einen Gehalt an aktivem Chlor von 500 bis 700 mg/l aufweist.

4. Verfahren nach einem der Ansprüche 1 bis 3, wobei die einer Elektrolyse ausgesetzte Salinelösung einen pH-Wert von 7,2 bis 8,5 aufweist.

5. Verfahren nach einem der Ansprüche 1 bis 4, wobei die einer Elektrolyse ausgesetzte Salinelösung ein Redoxpotential von 700 bis 900 mV aufweist.

6. Verfahren nach einem der Ansprüche 1 bis 5, **dadurch gekennzeichnet, dass** die einer Elektrolyse ausgesetzte Salinelösung über den landwirtschaftlichen Rohmaterialien oder Nebenprodukten und/oder Derivaten hiervon zerstäubt wird.

7. Verfahren nach einem der Ansprüche 1 bis 6, wobei die Nebenprodukte und/oder Derivate der landwirtschaftlichen Rohmaterialien pflanzlichen Ursprungs aus der Gruppe ausgewählt werden, bestehend aus Leinsaatschrot, Sojaschrot, Rapssaatschrot, Weizengrießkleie, Futtermais und Maniokpellets.

8. Verwendung einer versprühten wässrigen, einer Elektrolyse ausgesetzten Salinelösung zur Reduktion der mikrobiologischen Belastung bei landwirtschaftlichen Rohprodukten pflanzlichen Ursprungs oder Nebenprodukten und/oder Derivaten hiervon bei einer Dosis der Lösung von 0,2 bis 2% (v/w) der landwirtschaftlichen Rohmaterialien oder Nebenprodukte und/oder Derivate.

9. Verwendung nach Anspruch 8, wobei die Dosis der einer Elektrolyse ausgesetzten Salinelösung 0,2 bis 0,5% (v/w) der landwirtschaftlichen Rohmaterialien oder Nebenprodukte und/oder Derivate hiervon beträgt.

10. Verwendung nach Anspruch 8 oder 9, wobei die einer Elektrolyse ausgesetzte Salinelösung einen Gehalt an aktivem Chlor von 500 bis 700 mg/l besitzt.

11. Verwendung nach einem der Ansprüche 8 bis 10, wobei die einer Elektrolyse ausgesetzte Salinelösung einen pH-Wert von 7,2 bis 8,5 besitzt.

12. Verwendung nach einem der Ansprüche 8 bis 11, wobei die einer Elektrolyse ausgesetzte Salinelösung ein Redoxpotential von 700 bis 900 mV besitzt.

13. Verwendung nach einem der Ansprüche 8 bis 12, wobei die einer Elektrolyse ausgesetzte Salinelösung zerstäubt wird.

14. Verwendung nach einem der Ansprüche 8 bis 13, wobei die Nebenprodukte und/oder Derivate der landwirtschaftlichen Rohmaterialien pflanzlichen Ursprungs ausgewählt werden aus der Gruppe, bestehend aus Leinsaatschrot, Sojaschrot, Rapssaatschrot, Weizengrießkleie, Futtermais und Maniokpellets.

## Revendications

1. Procédé de réduction de la charge microbiologique sur des matières premières agricoles d'origine végétale ou sur des sous-produits et/ou des dérivés de ces dernières, comprenant l'étape consistant à pulvériser lesdites matières premières agricoles ou les sous-produits et/ou les dérivés de ces dernières avec une solution saline électrolysée aqueuse, dans lequel la dose de la solution saline électrolysée aqueuse appliquée est comprise entre 0,2 et 2 % (v/w) de la quantité desdites matières premières agricoles ou des sous-produits et/ou des dérivés.

2. Procédé selon la revendication 1, dans lequel la dose de ladite solution est comprise entre 0,2 et 0,5 % (v/w) de la quantité desdites matières premières agricoles ou des sous-produits et/ou des dérivés de ces dernières.

3. Procédé selon la revendication 1 ou 2, dans lequel la solution saline électrolysée a une teneur en chlore actif comprise entre 500 et 700 mg/l.

4. Procédé selon l'une quelconque des revendications 1 à 3, dans lequel la solution saline électrolysée a un pH compris entre 7,2 et 8,5.

5. Procédé selon l'une quelconque des revendications 1 à 4, dans lequel la solution saline électrolysée a un potentiel d'oxydo-réduction compris entre 700 et 900 mV.

6. Procédé selon l'une quelconque des revendications 1 à 5, **caractérisé en ce que** ladite solution saline électrolysée est atomisée sur lesdites matières premières agricoles ou lesdits sous-produits et/ou lesdits dérivés de ces dernières.

7. Procédé selon l'une quelconque des revendications 1 à 6, dans lequel les sous-produits et/ou les dérivés desdites matières premières agricoles d'origine végétale sont sélectionnés à partir du groupe constitué de brisures de graines de lin, de brisures de soja, de brisures de graine de colza, de déchets de blé, de maïs de fourrage, et de boulettes de manioc.

8. Utilisation d'une solution saline électrolysée aqueuse pulvérisée pour réduire la charge microbiologique sur des matières premières agricoles d'origine végétale ou sur des sous-produits et/ou des dérivés de ces dernières, à une dose de ladite solution comprise entre 0,2 et 2 % (v/w) desdites matières premières agricoles ou des sous-produits et/ou des dérivés.

9. Utilisation selon la revendication 8, dans laquelle la dose de ladite solution saline électrolysée est comprise entre 0,2 et 0,5 % (v/w) desdites matières premières agricoles ou desdits sous-produits et/ou desdits dérivés de ces dernières.

10. Utilisation selon la revendication 8 ou 9, dans laquelle la solution saline électrolysée a une teneur en chlore actif comprise entre 500 et 700 mg/l.

11. Utilisation selon l'une quelconque des revendications 8 à 10, dans laquelle la solution saline électrolysée a un pH compris entre 7,2 et 8,5.

12. Utilisation selon l'une quelconque des revendications 8 à 11, dans laquelle la solution saline électrolysée a un potentiel d'oxydo-réduction compris entre 700 et 900 mV.

13. Utilisation selon l'une quelconque des revendications 8 à 12, dans laquelle la solution saline électrolysée est atomisée.

14. Utilisation selon l'une quelconque des revendications 8 à 13, dans laquelle les sous-produits et/ou les dérivés desdites matières premières agricoles d'origine végétale sont sélectionnés à partir du groupe constitué de brisures de graines de lin, de brisures de soja, de brisures de graine de colza, de déchets de blé, de maïs de fourrage et de boulettes de manioc.
